# EUROPEAN PATENT SPECIFICATION

(11) **EP 2 481 529 B1**
(45) Date of publication and mention of the grant of the patent: **22.05.2013**
(21) Application number: 12000449.4
(22) Date of filing: 25.01.2012
(51) Int. Cl.: B25J 9/16, G05B 19/423

(54) **Method for manipulating a series of successively presented identical workpieces by means of a robot.**
Verfahren zur Manipulation einer Serie nacheinander präsentierter, identischer Werkstücke mithilfe eines Roboters
Procédé de manipulation d'une série de pièces de travail identiques présentées successivement au moyen d'un robot

(30) Priority: 31.01.2011 BE 201100057
(43) Date of publication of application: 01.08.2012
(73) Proprietor: ROBOJOB, besloten vennootschap met beperkte aansprakelijkheid, 2220 Heist-op-den-Berg (BE)
(72) Inventor: De Roovere, Helmut, 3140 Keerbergen (BE); De Ceuster, Luc, 2230 Herselt (BE)
(74) Representative: Donné, Eddy

(56) References cited:
- EP-A1- 2 263 837
- EP-A2- 1 522 912
- WO-A1-03/099526
- DE-A1- 2 430 058
- DE-A1- 19 626 459
- US-A1- 2009 132 088

## Description

The present invention relates to a method for manipulating a series of successively presented identical workpieces by means of a robot.

More specifically the invention is intended to automatically supply rough workpieces one by one from a supply system to a machine tool, in order to be processed by the machine tool, and/or to automatically remove the processed workpiece to a removal system.

For this, the workpieces have to be located in order to grip them and move them from the supply system to the machine tool and/or from the machine tool to the removal system.

It is hereby known to use a device with a robot equipped with a gripper in order to grasp the workpieces, whereby the robot is equipped with a vision system in which an image or a simplified image of an object, more specifically a workpiece, can be saved in a memory and whereby the robot is equipped with a changeover system to connect and disconnect the gripper.

To grip the workpieces, grippers are used that are either permanently attached to the robot flange, or can be attached to the robot flange via a manual or automatic rapid changeover system.

Depending on the complexity of the workpiece, simple to more complex grippers are used, such as two-point grippers, three-point grippers, vacuum grippers and similar.

When the workpieces are always repetitively presented at the same fixed position and with the same orientation, it is known that the robot can learn, through a "teaching" procedure, this fixed position and orientation and the way in which the workpiece must be gripped. A vision system is not necessarily needed for this purpose.

It is however possible to use a vision system to determine the position of a gripper, as is known from DE2430058, which describes a system for determining the spatial position of a gripping tool of a robot by using a vision system to recognize a marking on the gripping tool and calculating the position based on the data obtained from the vision system.

When on the other hand the workpieces are not always repetitively presented at the same place and with the same orientation, but are supplied in an arbitrary manner, for example on a conveyor belt, then it is known to use a vision system to be able to locate the workpieces supplied and then to grip them.

Such vision systems require the workpiece to be learned, or the workpiece to be parameterised.

With simple workpieces it can be sufficient to have a form known by the vision system beforehand whose dimensions are then determined by parameterisation.

With complex workpieces, the vision system has to learn the workpiece interactively.

After parameterising or teaching the workpiece to the vision system, the vision system sends the spatial position coordinates where the workpiece can be gripped to the robot.

The robot then uses these coordinates in movement instructions, such that the workpiece can be gripped and then moved.

Two such teaching systems are disclosed in WO03/0995326 and EP 2263837.

In WO03/0995326 a teaching method and system are described in which a object is recognised by a vision system and the intended path and/or activities of a robot arm with respect to the object are indicated by an operator by means of a pointing marker.

In EP 2263837 a highly automated system is described in which an area of an object to be gripped and other data concerning the shape of the object is selected is selected by an operator, together with a gripping orientation of a gripper which is selected from a series of predefined gripper orientations, after which the robot will grip the object using distance determining means.

The disadvantages of these methods are that the intervention of a trained operator is required each time:
- to "teach" the position determination of the workpiece to the robot;
- or to parameterise the workpiece and the gripper;
- or to teach the workpiece to the vision system.

This is a particular disadvantage when small series of workpieces have to be processed, as the relatively high cost of the trained operator weighs relatively heavily on the cost price of the workpieces.

The purpose of this invention is to provide a solution in a simple way to at least one of the aforementioned and other disadvantages.

To this end the invention concerns a method that makes use of a device as described above, whereby the gripper is provided with a recognition pattern recognisable by the vision system that is stored in the memory, whereby the method first comprises the following initial and one-off setup steps:
- the selection of a gripper with the aforementioned recognition pattern that is suitable for gripping a workpiece of the given type;
- the manual affixing of the selected gripper in a suitable gripping position for a first workpiece of the given type;
- the presentation of the workpiece within the field of vision of the vision system;
- the determination of the place and orientation of the recognition pattern of the gripper on the workpiece;
- the memorisation of this place and orientation of the recognition pattern with respect to a reference coordinate system;
- on the basis of the place and orientation thus determined, the robot is connected to the gripper by the changeover system, without thereby moving the workpiece with the gripper,
whereby for each subsequent presented workpiece of the given type, the method then comprises the following additional steps:
- the guiding of the robot to position and orienting the gripper according to the memorised place and orientation of the recognition pattern in the reference coordinate system, and the gripping of the workpiece in this situation;
- the moving and setting down of the workpiece to and on a desired position.

An advantage of this method is that the vision system will recognise the recognition pattern of the gripper in a simple way, and from there can derive the place and orientation of the gripper in which a workpiece can be gripped.

Once this position and orientation of the gripper has been determined, it is quite easy to guide the gripper to the set position for all subsequent workpieces that are presented in the same way, in order to grip and further manipulate the next workpiece.

However complex the workpiece is, if there is a suitable gripper with which this component can be gripped, and this gripper is equipped with a rapid changeover system with a recognition pattern recognisable by the vision system, using the method described above the robot can be automatically instructed, without it being necessary to teach the robot the position or without the vision system having to learn the workpiece each time, provided that the workpiece is always in the same place within the series.

In this case an additional advantage is that the vision system is only needed for setting up.

As the vision system is only needed to recognise the same recognition pattern on different grippers, there is no problem here with variable reflections from varying materials.

For example, this method can be applied to:
- loading a rough workpiece onto a machine tool;
- unloading a finished workpiece from a machine tool;
- unloading a rough workpiece from a supply system if this supply system always supplies the workpiece in the same position.

In the event of successive workpieces being presented in an arbitrary position and according to an arbitrary orientation, by extension of the foregoing, the following is done once, only for the setup:
- a picture is taken of a workpiece of the type concerned by the vision system, and a relative reference coordinate system is linked to this image,
- after manually affixing a suitable gripper on the first workpiece, the relative place and orientation of the recognition pattern of the gripper on the workpiece is determined with respect to the aforementioned relative reference coordinate system linked to the workpiece;
- this relative place and orientation is memorised in the memory,
and for each subsequent presented workpiece of the type concerned:
- first a picture is taken of the workpiece as it is presented;
- then a relative reference coordinate system is linked to the presented workpiece by the vision system and its place and orientation are determined and saved in a memory with respect to the fixed absolute reference coordinate system;
- the robot is guided to position and orient the gripper according to the memorised place and orientation of the recognition pattern within the relative reference coordinate system, whose place and position are known with respect to the fixed absolute reference coordinate system;
- the gripping and moving of the workpiece.

The advantage of such methods is that the user does not need to teach the robot where the workpiece is located.

Depending on the workpiece a suitable gripper is just brought to the workpiece, after which the position is automatically determined for the continuation of the series.

With the intention of better showing the characteristics of the invention, a few preferred methods according to the invention, and a device and gripper applied thereto, are described hereinafter by way of an example, without any limiting nature, with reference to the accompanying drawings, wherein:
figure 1 schematically shows a perspective view of a device for the application of the method according to the invention;
figure 2 shows, on a larger scale, the part designated by F2 in figure 1;
figure 3 shows a top view according to arrow F3 in figure 2;
figures 4 to 6 show successive steps of the method according to the invention, more specifically when setting up;

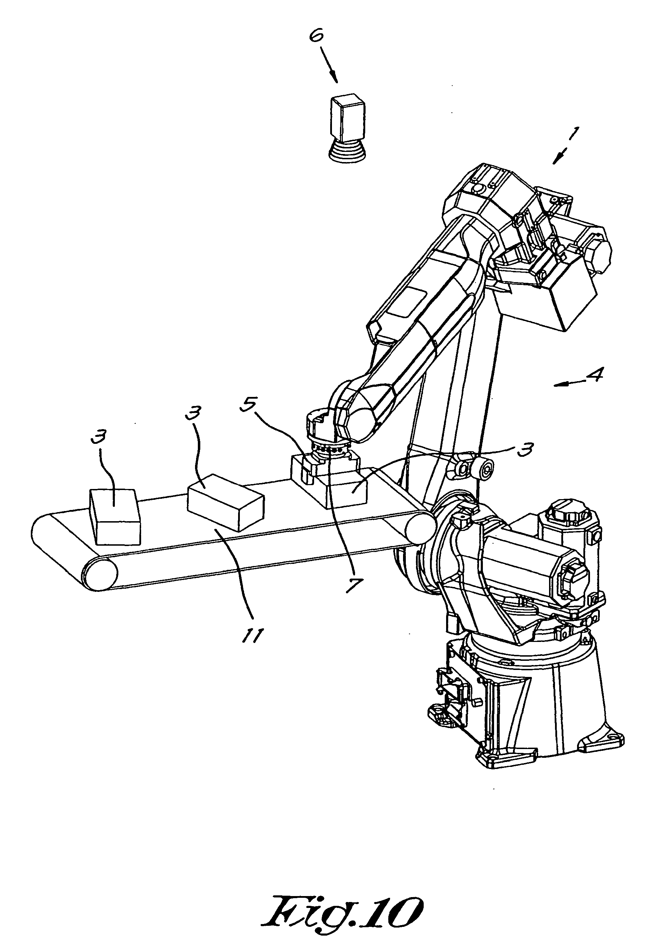

figures 7 to 11 show successive steps of an alternative method according to the invention.

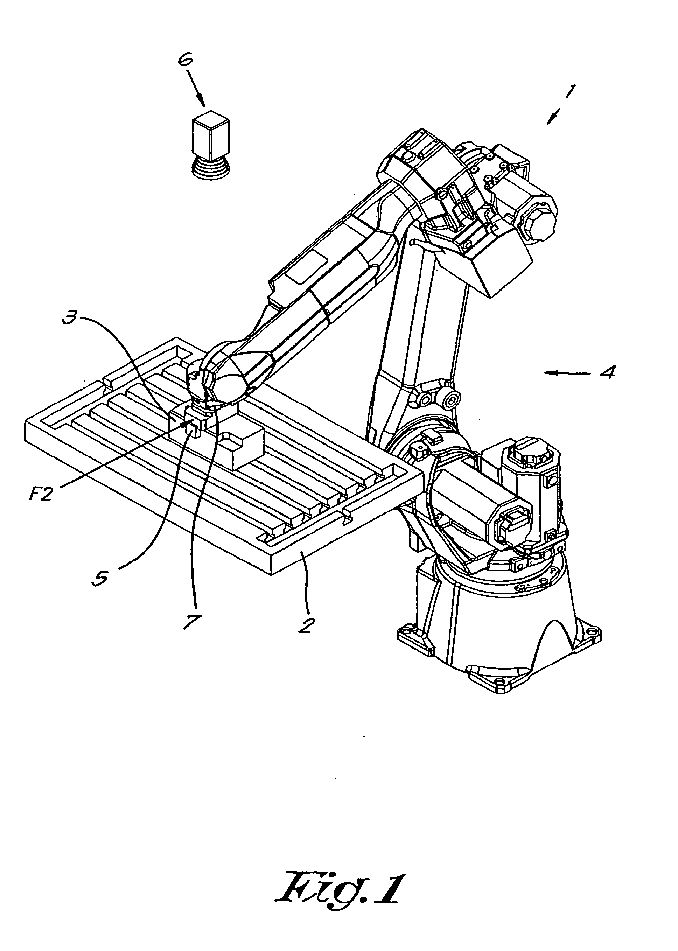

The device shown in figure 1 primarily consists of a supply platform 2 for workpieces 3 and a robot 4 for manipulating the workpieces 3, to which end this robot is equipped with a gripper 5 or a series of grippers to be able to grip and move the workpieces 3, for example to a machine tool not shown in the drawings.

The robot 4 is equipped with a vision system 6 that is schematically presented in figure 1 as a camera directed at the supply system, and which is able to record in a memory an image or a simplified image of an object in its field of vision.

The robot 4 is further equipped with a changeover system 7 for grippers 5, that is preferably an automatic rapid changeover system.

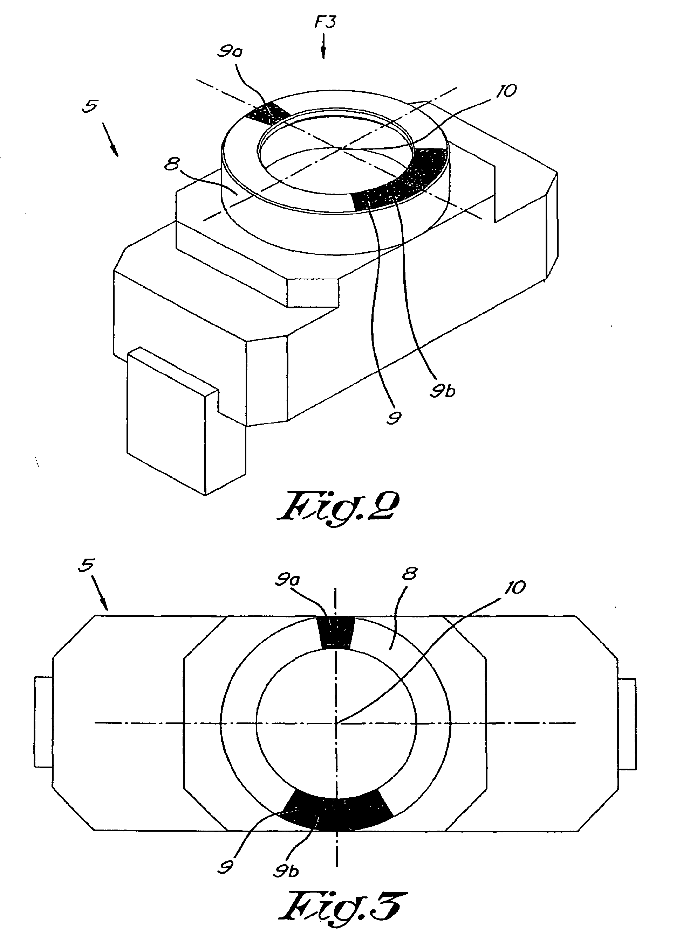

For the connection to the rapid changeover system 7 the grippers 5 are equipped with a connecting element 8 as shown in figures 2 and 3, and the gripper 5 or the connecting element 8 are provided with a recognition pattern 9 recognisable by the vision system 6, of which an image or simplified image has been saved beforehand in the aforementioned memory of the vision system 6.

The recognition pattern can be any pattern, but must enable the vision system to locate the recognition pattern in space, in other words to determine the place and orientation of it, and consequently the place and orientation of the gripper 5.

In the example of figures 2 and 3, the connecting element 8 contains a circular raised collar and the recognition pattern 9 is formed, in these drawings as an example without any limiting nature, by two concentric circular segments 9a and 9b of a different length that are diametrically opposite one another with respect to their centre 10.

The image of the recognition pattern observed by the vision system enables, by comparison to the image stored in the memory, the centre of the recognition pattern to be located, as well as the orientation of the recognition pattern and the distance to the vision system to be determined by comparing the diameters of both images.

Preferably the recognition pattern 9 is centred at the centre 10 or a reference point of the connecting element 8, which, when connecting the gripper 5 to the changeover system 7, coincides with the centre or a reference point of this changeover system 7.

The device 1 is used for the application of a method according to the invention for manipulating a series of successively presented identical workpieces 3 of a given type.

The method is different depending on whether the workpieces are always presented in the same fixed place, or in an arbitrary place.

In both cases a one-off setup procedure for the robot 4 with its vision system 6 is required.

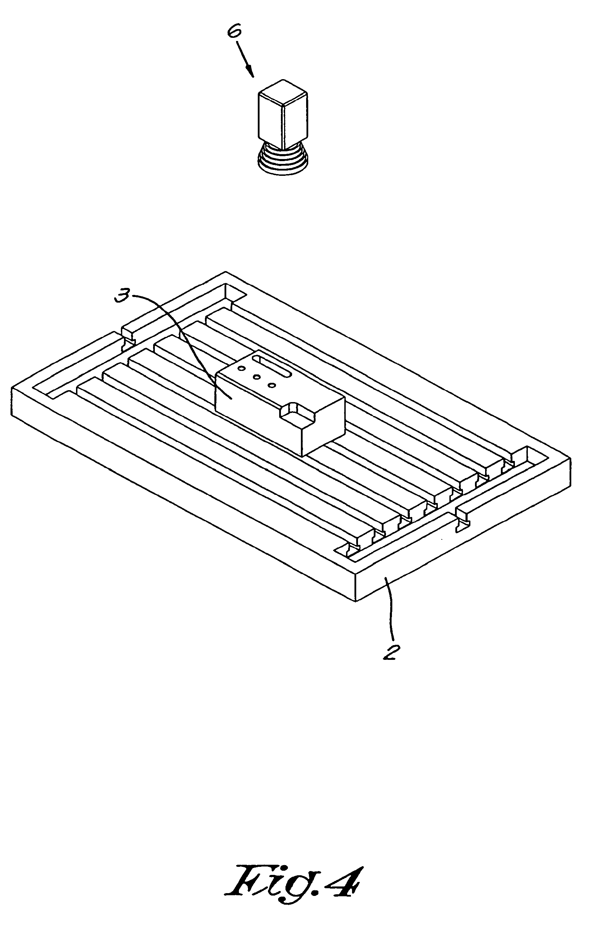

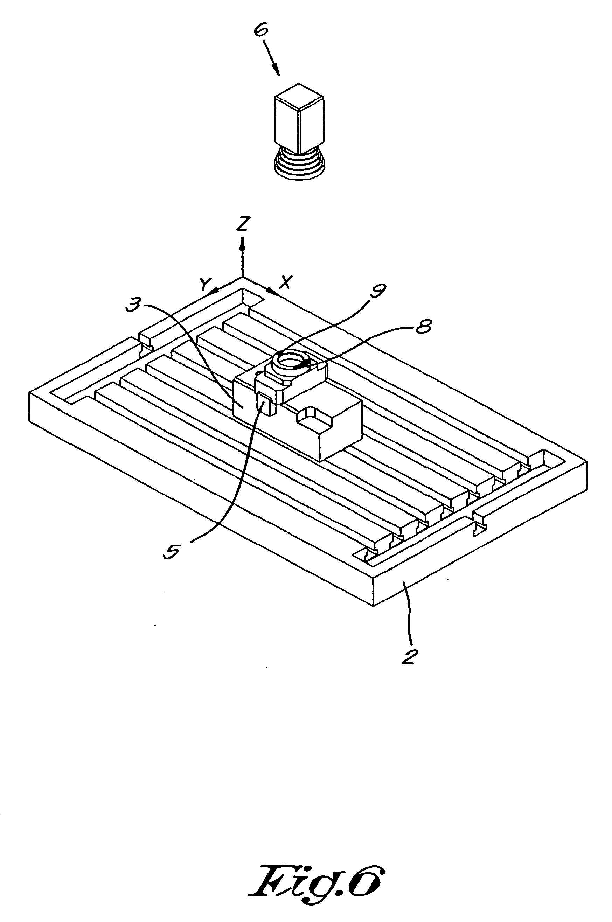

On the basis of figures 4 to 6, the setup procedure is described for the case when the successive workpieces 3 are always presented in the same place.

In the first stage, a first workpiece of the type concerned is supplied on the supply platform 2 and presented in the field of vision of the vision system 6, as shown in figure 4, and at the place and with the orientation in which the subsequent workpieces 3 will be presented.

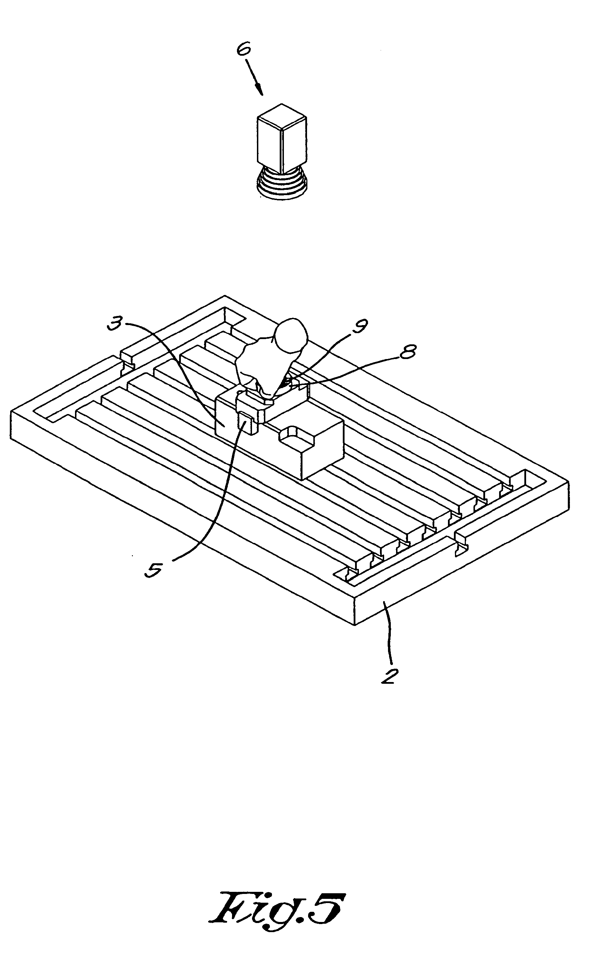

Then a gripper 5 is selected with an aforementioned recognition pattern 9 that is suitable for gripping the workpiece 3, and this selected gripper 5, as schematically shown in figure 5, is manually mounted on the workpiece 3 in a suitable gripping position without moving the workpiece, whereby if necessary the gripper 5 can be manually adjusted according to the form of the workpiece 3.

In a subsequent setup stage the place and orientation of the recognition pattern of the gripper 5 on the workpiece 3 is determined, by means of the image of the recognition pattern 9 observed by the vision system 6, with respect to a chosen fixed reference coordinate system XYZ that is linked to the supply platform for example.

The thus determined data are memorised in the aforementioned memory.

Finally these data are passed on to the robot 4 in order to connect the gripper 5 via the changeover system 7 to the robot 4, to which end the robot 4 is traditionally provided with the necessary instruction set in order to be able to execute it independently on the basis of the aforementioned data.

The setup is thereby ended and for the manipulation of the subsequent pieces the gripper 5 concerned remains connected to the robot 4.

The subsequent workpieces are now presented on the supply platform 2, each time at the aforementioned fixed position and always with the same orientation.

With each subsequent presented workpiece 3 the robot 4 moves such that the gripper 5, each time in the same position and with the same orientation, is guided according to the memorised place and orientation of the recognition pattern on the gripper 5.

Then the workpiece 3 can be gripped, moved and set down for a subsequent operation, for example to a removal conveyor belt or location, after which the robot 4 can collect a subsequent presented workpiece.

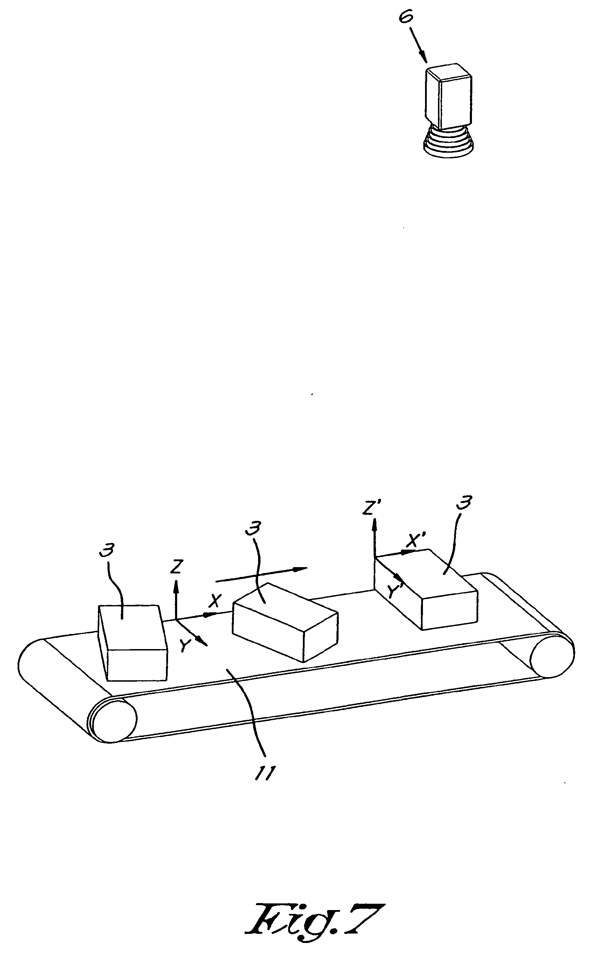

When the workpieces are not always presented in the same place, but for example in an arbitrary way on a conveyor belt 11 or similar, as illustrated in figure 7, then during the setup procedure described above the following additional steps are taken.

Before the gripper is manually mounted on the first workpiece 3, a picture is first taken of the workpiece 3 by the vision system, and this image is saved in the aforementioned memory.

An operator will then link a relative reference coordinate system X'Y'Z', as illustrated in figure 7, to this image of the workpiece 3, for example by calling up this image on a screen of the vision system 6 and designating two contrast lines with the cursor, for example, for each coordinate axis of the relative reference coordinate system X'Y'Z'.

The vision system 6 thereby knows the place and orientation of this relative coordinate system X'Y'Z' in the absolute coordinate system XYZ.

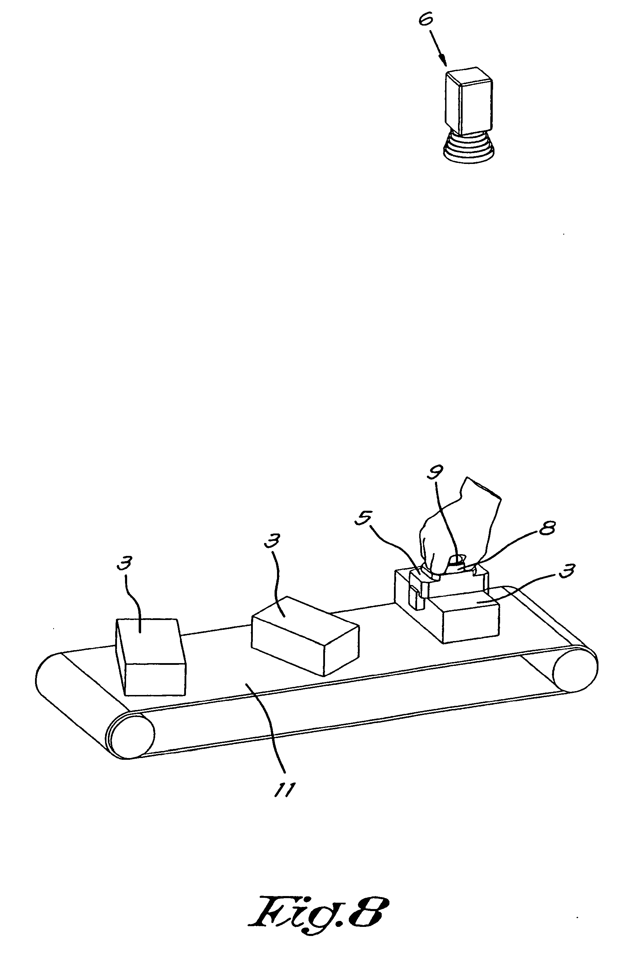

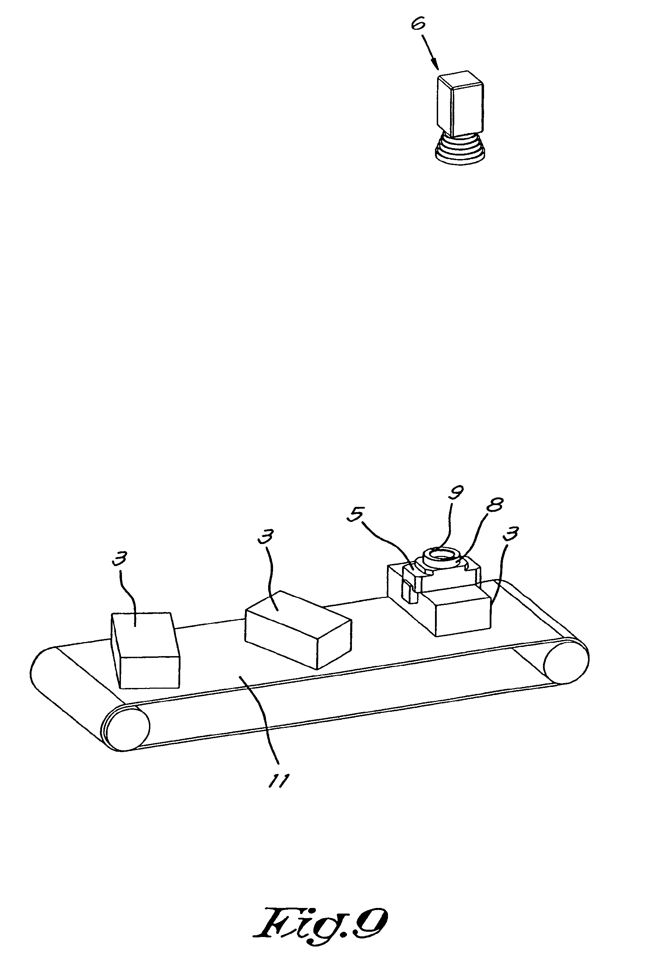

After manually affixing the selected gripper 5, as illustrated in figure 8, then for the first workpiece 3, the relative position and orientation of the recognition pattern 9 of the gripper 5 on the workpiece 3 is determined with respect to the relative reference coordinate system X'Y'Z' linked to the workpiece 3 by taking a picture of the recognition pattern 9 on the gripper 5, as shown in figure 9.

The data obtained are saved in the memory.

The robot 4 is controlled on the basis of these data in order to connect the gripper 5 to the changeover system 7 in order to be able to manipulate the workpiece 3.

The setup procedure is thereby ended whereby the vision system 6 now knows the relative position of the gripper 5 with respect to the workpiece 3.

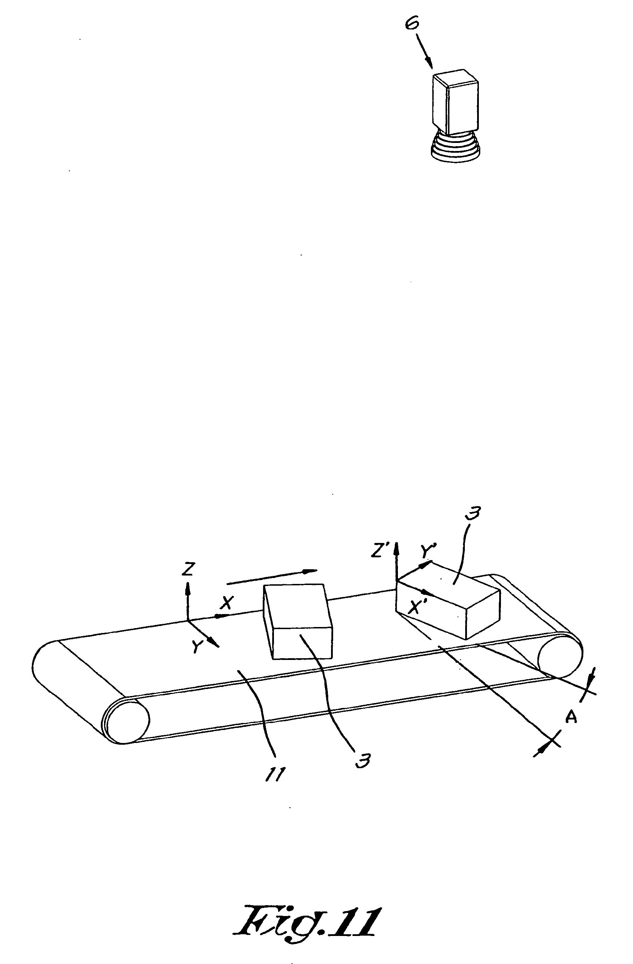

For each subsequent presented workpiece 3 of the type concerned:
- a picture is taken of the workpiece 3 as presented in an arbitrary position and with an arbitrary orientation;
- a relative reference coordinate system X'Y'Z', as taught, is linked to the presented workpiece 3 by the vision system, as illustrated in figure 11, and the place and orientation A of it is determined with respect to the fixed absolute reference coordinate system XYZ and saved in the memory;
- the robot 4 is guided to position and orient the gripper 5 according to the memorised place and orientation of the recognition pattern 9 within the relative reference coordinate system X'Y'Z' whose place and position are known with respect to the fixed absolute reference coordinate system XYZ;
- the gripping and moving of the workpiece 3 in order to make room for a subsequent workpiece 3.

The complete procedure in event of the workpieces 3 being presented arbitrarily can be summarised as follows.
1. The vision system 6 first takes a picture of the workpiece 3 alone, calculates and memorises a reference coordinate system on this (reference point + angular displacement(s)).
2.Then a gripper 5 is affixed to the workpiece 3 without moving it, with the recognition pattern 9 recognisable by and taught once to the vision system 6.
3. The vision system 6 now determines the position of the gripper 5 and also calculates the relative position of the gripper 5 with respect to the aforementioned memorised reference coordinate system X'Y'Z' on the workpiece 3.
4.Then, through movement instructions, the robot 4 guides the robot flange with rapid changeover system 7 according to the gripper coordinates determined by the vision system 6.
5. The robot 4 picks up the gripper 5 as well as the workpiece 3 on which the gripper is located.
6. For the subsequent arbitrarily presented workpieces, the reference coordinate system X'Y'Z' on the workpiece 3 is determined by the vision system each time.
7. By applying the relative position of the gripper 5 calculated under point 3 to the new reference coordinate system, each same workpiece that is presented in an arbitrary position can then be correctly gripped.

It is clear that in the methods described above, the steps do not necessarily have to follow one another in the specified order, but for example in the first described method in which the workpieces 3 are always presented in the same place, the gripper 3 can be provided on the first workpiece 3 in a different place before bringing the gripper 5 together with workpiece 3 into position to take a picture of it.

It is clear that with the methods according to the invention no complicated and time-consuming adjustments are needed and they only require operations that do not necessarily require the intervention of a trained operator. Furthermore, a simple vision system is sufficient to be able to realise the method, whereby in the simplest case only an image of the recognition pattern is saved in the memory of the system.

It is clear that the successively presented workpieces 3 do not have to be completely identical, but in all respects must correspond to the extent that they must be able to be presented in an analogous way, i.e. with the same position and orientation, for an analogous operation, for example in a machine tool.

In summary the method according to the invention makes use of a device for manipulating a series of successively presented identical or practically identical workpieces 3 of a given type, and this device 1 comprises a robot 4 with a changeover system 7 for connecting and disconnecting one or more grippers 5; one more grippers 5; and a vision system 6 or similar in which an image or simplified image of an object can be saved in a memory, whereby the gripper 5 is provided with a recognition pattern 9 recognisable by the vision system 6 of which an image or a simplified image is saved in the memory, and which enables the place and orientation of the gripper 5 to be determined, more specifically when it is affixed to a workpiece 3 of the given type.

The changeover system 7 of the robot 4 can be an automatic rapid changeover system.

To connect and disconnect a gripper 5, the gripper 5 can be equipped with a connecting element 8 that can engage with the changeover system 7 concerned of the robot 4, whereby a recognition pattern 9 is affixed to this connecting element 8.

The method according to the invention also makes use of a gripper 5 that is provided with a recognition pattern 9 that is recognisable by a vision system 6 in order to determine the place and orientation of the gripper 5.

This gripper can thereby be equipped with a connecting element 8 to connect and disconnect with a changeover system 7 of a robot 4 whereby the recognition pattern 9 is affixed to this connecting element 8.

The present invention is by no means limited to the method and device described as an example and shown in the drawings, but a method, device and gripper according to the invention can be realised in all kinds of variants, without departing from the scope of the invention as defined by the claims.

## Claims

1. Method for manipulating a series of successively presented identical or almost identical workpieces (3) of a given type by means of a gripper (5) of a robot (4), more specifically to locate, grip and move the workpieces (3), whereby the robot (4) is equipped with a vision system (6) in which an image or simplified image of an object can be stored in a memory and whereby the robot (4) is equipped with a changeover system (7) for connecting and disconnecting a gripper (5), **characterised in that** the gripper (5) is provided with a recognition pattern (9) recognisable by the vision system (6) that is stored in the memory, and that the method first comprises the following initial and one-off setup steps:
- the selection of a gripper (5) with the aforementioned recognition pattern (9) that is suitable for gripping a workpiece (3) of the given type;
- the manual affixing of the selected gripper (5) in a suitable gripping position for a first workpiece (3) of the given type;
- the presentation of the workpiece (3) within the field of vision of the vision system (6);
- the determination of the place and orientation of the recognition pattern (9) of the gripper (5) on the workpiece (3);
- the memorisation of this place and orientation of the recognition pattern (9) with respect to a reference coordinate system (XYZ, X'Y'Z');
- on the basis of the place and orientation thus determined, the robot (4) is connected to the gripper (5) by the changeover system (7), without thereby moving the workpiece (3) with the gripper (5),
whereby for each subsequent presented workpiece (3) of the given type, the method then comprises the following additional steps:
- the guiding of the robot (4) to position and orient the gripper (5) according to the memorised place and orientation of the recognition pattern (9) in the reference coordinate system (XYZ, X'Y'Z'), and the gripping of the workpiece in this situation;
- the moving and setting down of the workpiece (3) to and on a desired position.

2. Method according to claim 1, **characterised in that**, to connect and disconnect a gripper (5), the gripper (5) is equipped with a connecting element (8) that can engage with the changeover system (7) of the robot (4) and that the recognition pattern (9) is affixed to this connecting element (8).

3. Method according to claim 1 or 2, **characterised in that** in the event of successive workpieces (3) always being repetitively presented in the same place and according to the same orientation, the aforementioned setup stages are executed with the first workpiece (3), with the first workpiece (3) concerned at the place and with the orientation to determine the corresponding place and orientation of the recognition pattern (9) of the gripper (5) on the workpiece (3) and then, for each subsequent presented workpiece (3), the robot (4) is guided to position the gripper (5) according to the memorised place and orientation of the recognition pattern (9) in the reference coordinate system (XYZ) which, in this case, is a fixed absolute coordinate system (XYZ) that is entered once in the vision system (6) at the start.

4. Method according to claim 1 or 2, **characterised in that** in the event of successive workpieces (3) being presented in an arbitrary position and according to an arbitrary orientation, the following are done once only for the setup:
- a picture is taken of a workpiece (3) of the type concerned by the vision system (6), and a relative reference coordinate system (X'Y'Z') is linked to this image,
- after manually affixing the selected gripper (5) on the first workpiece (3), the relative place and orientation of the recognition pattern (9) of the gripper (5) on the workpiece (3) is determined with respect to the aforementioned relative reference coordinate system (X'Y'Z') linked to the workpiece (3);
- this relative place and orientation is memorised in the memory,
and for each subsequent presented workpiece (3) of the type concerned:
- first a picture is taken of the workpiece (3) as it is presented;
- a relative reference coordinate system (X'Y'Z') is linked to the presented workpiece (3) by the vision system (6) and its place and orientation are determined and saved in a memory with respect to the fixed absolute reference coordinate system (XYZ);
- the robot (4) is guided to position and orient the gripper (5) according to the memorised place and orientation of the recognition pattern (9) within the relative reference coordinate system (X'Y'Z'), whose place and position are known with respect to the fixed absolute reference coordinate system (XYZ);
- the gripping and moving of the workpiece (3).

## Patentansprüche

1. Verfahren zur Manipulation einer Serie nacheinander präsentierter, identischer oder nahezu identischer Werkstücke (3) eines gegebenen Typs mittels eines Greifers (5) eines Roboters (4), spezifischer zum Lokalisieren, Ergreifen und Bewegen der Werkstücke (3), wobei der Roboter (4) mit einem Sichtsystem (6) ausgerüstet ist, worin ein Bild oder ein vereinfachtes Bild eines Objekts in einem Speicher gespeichert werden kann und wobei der Roboter (4) mit einem Wechselsystem (7) zum An- und Abkoppeln eines Greifers (5) ausgerüstet ist, **dadurch gekennzeichnet, dass** der Greifer (5) mit einem von dem Sichtsystem (6) erkennbaren, in dem Speicher gespeicherten Erkennungsmuster (9) versehen ist, und dass das Verfahren zuerst die folgenden einleitenden und einmaligen Einstellschritte umfasst:
- das Auswählen eines Greifers (5) mit dem vorgenannten Erkennungsmuster (9), der zum Ergreifen eines Werkstücks (3) des gegebenen Typs geeignet ist;
- das manuelle Anbringen des ausgewählten Greifers (5) in einer geeigneten - Greifposition für ein erstes Werkstück (3) des gegebenen Typs;
- das Präsentieren des Werkstücks (3) innerhalb des Gesichtsfelds des Sichtsystems (6);
- das Bestimmen der Stelle und Orientierung des Erkennungsmusters (9) des Greifers (5) an dem Werkstück (3);
- das Speichern dieser Stelle und Orientierung des Erkennungsmusters (9) in Bezug auf ein Referenzkoordinatensystem (XYZ, X'Y'Z');
- auf Basis der so bestimmten Stelle und Orientierung wird der Roboter (4) durch das Wechselsystem (7) mit dem Greifer (5) verbunden, ohne dabei das Werkstück (3) mit dem Greifer (5) zu bewegen,
wobei das Verfahren dann für jedes nachfolgend präsentierte Werkstück (3) des gegebenen Typs die folgenden zusätzlichen Schritte umfasst:
- das Ansteuern des Roboters (4) zum Positionieren und Orientieren des Greifers (5) gemäß der gespeicherten Stelle und Orientierung des Erkennungsmusters (9) in dem Referenzkoordinatensystem (XYZ, X'Y'Z'), und das Ergreifen des Werkstücks in dieser Situation;
- das Bewegen und Absetzen des Werkstücks (3) zu einer und auf eine gewünschte Position.

2. Verfahren nach Anspruch 1, **dadurch gekennzeichnet, dass** für das An- und Abkoppeln eines Greifers (5) der Greifer (5) mit einem Verbindungselement (8) versehen ist, das mit dem Wechselsystem (7) des Roboters (4) in Eingriff treten kann, und dass das Erkennungsmuster (9) an diesem Verbindungselement (8) angebracht ist.

3. Verfahren nach Anspruch 1 oder 2, **dadurch gekennzeichnet, dass** in dem Fall, dass aufeinanderfolgende Werkstücke (3) stets repetierend an derselben Stelle und gemäß derselben Orientierung präsentiert werden, die vorgenannten Einstellschritte mit dem ersten Werkstück (3) ausgeführt werden, mit dem betreffenden ersten Werkstück (3) an der Stelle und mit der Orientierung zur Bestimmung der entsprechenden Stelle und Orientierung des Erkennungsmusters (9) des Greifers (5) an dem Werkstück (3), und dann, für jedes nachfolgend präsentierte Werkstück (3), der Roboter (4) angesteuert wird, um den Greifer (5) gemäß der gespeicherten Stelle und Orientierung des Erkennungsmusters (9) in dem Referenzkoordinatensystem (XYZ) zu positionieren, welches letztere in diesem Fall ein festes absolutes Koordinatensystem (XYZ) ist, das zu Beginn einmal in das Sichtsystem (6) eingegeben ist.

4. Verfahren nach Anspruch 1 oder 2, **dadurch gekennzeichnet, dass** in dem Fall, dass die aufeinanderfolgenden Werkstücke (3) in einer willkürlichen Position und gemäß einer willkürlichen Orientierung präsentiert werden, folgendes nur beim Einstellen einmalig vollzogen wird:
- von dem Sichtsystem (6) wird ein Bild von einem Werkstück (3) des betreffenden Typs genommen und mit diesem Bild wird ein relatives Referenzkoordinatensystem (X'Y'Z') verknüpft,
- nach dem manuellen Anbringen des ausgewählten Greifers (5) an dem ersten Werkstück (3) wird die relative Stelle und Orientierung des Erkennungsmusters (9) des Greifers (5) an dem Werkstück (3) in Bezug auf das mit dem Werkstück (3) verknüpfte vorgenannte relative Referenzkoordinatensystem (X'Y'Z') bestimmt;
- diese relative Stelle und Orientierung wird in dem Speicher gespeichert, und für jedes nachfolgend präsentierte Werkstück (3) des betreffenden Typs:
- wird zuerst ein Bild von dem Werkstück (3) genommen, wie es präsentiert wird;
- wird von dem Sichtsystem (6) ein relatives Referenzkoordinatensystem (X'Y'Z') mit dem präsentierten Werkstück (3) verknüpft und wird dessen Stelle und Orientierung in Bezug auf das feste absolute Referenzkoordinatensystem (XYZ) bestimmt und in einem Speicher gespeichert;
- wird der Roboter (4) angesteuert, um den Greifer (5) gemäß der gespeicherten Stelle und Orientierung des Erkennungsmusters (9) in dem relativen Referenzkoordinatensystem (X'Y'Z'), dessen Stelle und Position in Bezug auf das feste absolute Referenzkoordinatensystem (XYZ) bekannt sind, zu positionieren und orientieren;
- wird das Werkstück (3) ergriffen und bewegt.

## Revendications

1. Procédé pour manipuler une série de pièces à usiner identiques ou pratiquement identiques (3) d'un type donné présentées de manière successive, au moyen d'un organe de préhension (5) d'un robot (4), plus spécifiquement pour positionner, saisir et déplacer les pièces à usiner (3), le robot (4) étant équipé d'un système de vision dans lequel une image ou une image simplifiée d'un objet peut être mise en mémoire et le robot (4) étant équipé d'un système d'échange (7) pour la connexion et la déconnexion d'un organe de préhension (5), **caractérisé en ce que** l'organe de préhension (5) est muni d'un modèle de reconnaissance (9) qui peut être reconnu par le système de vision (6) qui est mis en mémoire, et **en ce que** le procédé comprend d'abord les étapes initiales et uniques de réglage :
- la sélection d'un organe de préhension (5) possédant le modèle de reconnaissance susmentionné (9) qui est approprié pour saisir une pièce à usiner (3) de type donné ;
- la fixation manuelle de l'organe de préhension sélectionné (5) dans une position de préhension appropriée pour une première pièce à usiner (3) de type donné ;
- la présentation de la pièce à usiner (3) au sein du champ de vision du système de vision (6) ;
- la détermination de la place et de l'orientation du modèle de reconnaissance (9) de l'organe de préhension (5) sur la pièce à usiner (3) ;
- la mémorisation de cette place et de cette orientation du modèle de reconnaissance (9) par rapport à un système de coordonnées de référence (XYZ, X'Y'Z') ;
- sur base de la place et de l'orientation ainsi déterminées, le robot (4) est raccordé à l'organe de préhension (5) via le système d'échange (7), sans déplacer ainsi la pièce à usiner (3) avec l'organe de préhension (5) ;
pour chaque pièce à usiner présentée ultérieurement (3) du type donné, le procédé comprend ensuite les étapes supplémentaires suivantes :
- guider le robot (4) pour positionner et pour orienter l'organe de préhension (5) en fonction de la place et de l'orientation mémorisées du modèle de reconnaissance (9) dans le système de coordonnées de référence (XYZ, X'Y'Z') ;
- déplacer et poser la pièce à usiner (3) en direction et dans la position désirée.

2. Procédé selon la revendication 1, **caractérisé en ce que**, pour la connexion et la déconnexion d'un organe de préhension (5), l'organe de préhension (5) est équipé d'un élément de raccordement (8) qui peut entrer en contact avec le système d'échange (7) du robot (4) et **en ce que** le modèle de reconnaissance (9) est fixé à cet élément de raccordement (8).

3. Procédé selon la revendication 1 ou 2, **caractérisé en ce que**, dans le cas de pièces à usiner successives (3) qui sont toujours présentées de manière répétitive au même endroit et conformément à la même orientation, les étapes de réglage susmentionnées sont exécutées avec la première pièce à usiner (3), avec cette première pièce à usiner (3) concernée à l'endroit et avec l'orientation pour déterminer la place et l'orientation correspondantes du modèle de reconnaissance (9) de l'organe de préhension (5) sur la pièce à usiner (3), et ensuite, pour chaque pièce à usiner présentée ultérieurement (3), le robot (4) est guidé pour positionner l'organe de préhension (5) conformément à la place et l'orientation mémorisées du modèle de reconnaissance (9) dans le système de coordonnées de référence (XYZ) qui, dans ce cas-ci, représente un système de coordonnées fixes absolues (XYZ) qui est entré une fois pour toutes dans le système de vision (6) au début.

4. Procédé selon la revendication 1 ou 2, **caractérisé en ce que**, dans le cas de pièces à usiner successives présentées dans une position arbitraire et conformément à une orientation arbitraire, les opérations suivantes sont réalisées une seule fois pour le réglage :
- une photographie d'une pièce à usiner (3) du type concerné est prise par le système de vision (6) et un système de coordonnées de référence relatives (X'Y'Z') est lié à cette photographie ;
- après la fixation manuelle de l'organe de préhension sélectionné (5) sur la première pièce à usiner (3), on détermine la place et l'orientation relatives du modèle de reconnaissance (9) de l'organe de préhension (5) sur la pièce à usiner (3) par rapport au système de coordonnées de référence relatives (X'Y'Z') relié à la pièce à usiner (3) ;
- cette place et cette orientation relatives sont mises en mémoire,
et pour chaque pièce à usiner présentée ultérieurement (3) du type concerné :
- d'abord une photographie de la pièce à usiner (3) est prise sous sa forme telle que présentée ;
- un système de coordonnées de référence relatives (X'Y'Z') est relié à la pièce à usiner présentée (3) par le système de vision (6) et sa place et son orientation sont déterminées et mises en mémoire par rapport au système de coordonnées fixes absolues (XYZ) ;
- le robot (4) est guidé pour positionner et pour orienter l'organe de préhension (5) conformément à la place et à l'orientation mémorisées du modèle de reconnaissance (9) au sein du système de coordonnées de référence relatives (X'Y'Z') dont la place et la position sont connues par rapport au système de coordonnées fixes absolues (XYZ) ;
- la pièce à usiner (3) est saisie et déplacée.
